# EUROPEAN PATENT SPECIFICATION

(11) **EP 2 913 581 B1**
(45) Date of publication and mention of the grant of the patent: **20.12.2017**
(21) Application number: 13814405.0
(22) Date of filing: 04.02.2013
(51) Int. Cl.: F21S 8/10, B60Q 1/08, H05B 33/08, B60Q 1/00, B60Q 1/14

(54) **VEHICLE-MOUNTED INTELLIGENT LIGHTING DEVICE**
INTELLIGENTE FAHRZEUGMONTIERTE BELEUCHTUNGSVORRICHTUNG
DISPOSITIF D'ÉCLAIRAGE INTELLIGENT MONTÉ SUR UN VÉHICULE

(43) Date of publication of application: 02.09.2015
(73) Proprietor: Lee, Wen-Sung, Taichung City 40861, Taiwan (CN)
(72) Inventor: Lee, Wen-Sung, Taichung City 40861, Taiwan (CN)
(74) Representative: Chaillot, Geneviève
(86) International application number: PCT/CN2013/071316
(87) International publication number: WO 2014/117399

(56) References cited:
- EP-A2- 0 893 304
- CN-A- 102 107 622
- CN-U- 201 659 924
- CN-Y- 2 285 223
- CN-Y- 201 335 297
- US-A1- 2002 051 364
- US-A1- 2004 114 380
- US-A1- 2009 072 124

## Description

### BACKGROUND OF THE INVENTION

### 1. Field of the Invention

The present invention relates to a light device, and more particularly to an intelligent light device for a vehicle which adjusts the illumination level of a light body according to the illumination level of the surrounding environment.

### 2. Description of Related Art

Cycling has become a trend all over the world since it is energy-saving and zero-pollution. In order to ride the bicycle safely, a light device is usually disposed on the bicycle for illumination and warning purposes.

A conventional light device for a bicycle comprises a circuit and a light-emitting diode (hereinafter referred to as LED). The circuit is connected to the LED. The LED is connected to a cadmium sulfide photoresistor (hereinafter referred to as CDS). The CDS is connected to a switch and has a photosensor which senses the illumination level of the surrounding area thereof. The switch selectively connects or breaks an electrical circuit of the conventional light device for a bicycle according to the vibration level of a bicycle so as to control the illumination of the LED, wherein the switch connects the electrical circuit of the conventional light device for the bicycle when the bicycle is vibrated. Under this arrangement, the illumination of the LED is controlled by the photosensor of the CDS and the switch. Although the conventional light device for a bicycle turns on or off according to the illumination level of the surrounding area, the illumination level of the LED cannot be adjusted to an appropriate illumination level because of the structure of the switch. In addition, the photosensor of the CDS is not able to sense the illumination level within a predefined area.

As a result, the disadvantages of the conventional light device for a bicycle are further detailed as following.

Firstly, the illumination level of the LED cannot be adjusted to the appropriate illumination level corresponding to the surrounding environment. Therefore, the illumination level of the LED might not be enough to illuminate a front area of a bicycle in one case so as to cause a bike accident; in another case, the illumination level of the LED might be excess so as to cause a waste of the power.

Secondly, the conventional light device for a bicycle needs to be equipped with a power source with a high capacitance because the conventional light device for a bicycle sometimes keeps turning on even when the illumination is not necessary. The power source with the high capacitance is either expensive or largely sized and weight. Therefore, the conventional light device for a bicycle is inconvenient and not economic for a user.

US2004114380 A1 discloses a method and an apparatus for automatic control of illumination devices for a vehicle as defined in the preamble of claim 1.

Thereby, the present invention has arisen to mitigate and/or obviate the disadvantages of conventional light device for a vehicle.

### SUMMARY OF THE INVENTION

The main objective of the present invention is to provide an improved light device for a vehicle.

To achieve the objective, an intelligent light device for a vehicle according to the present invention is as defined in claim 1.

Further benefits and advantages of the present invention will become apparent after a careful reading of the detailed description with appropriate reference to the accompanying drawings.

### BRIEF DESCRIPTION OF THE DRAWINGS

Fig. 1 is a schematic view for showing a light beam projected from an intelligent light device for a vehicle in accordance with the present invention;
Fig. 2 is a flow chart for showing a light-controlling unit of the present invention;
Fig. 3 is a schematic view for showing the present invention is assembled onto a bicycle and lights one light projection region;
Fig. 4 is a schematic view for showing the present invention is assembled onto a car and lights another light projection region; and
Fig. 5 includes three plots, the top plot shows a first illumination level of a surrounding area of the light projection region is plotted with the corresponding time; the middle plot shows a driving current of the present invention is plotted with the corresponding time; the bottom plot shows a third illumination level of the light projection region is plotted with the corresponding time.

### DETAILED DESCRIPTION OF THE INVENTION

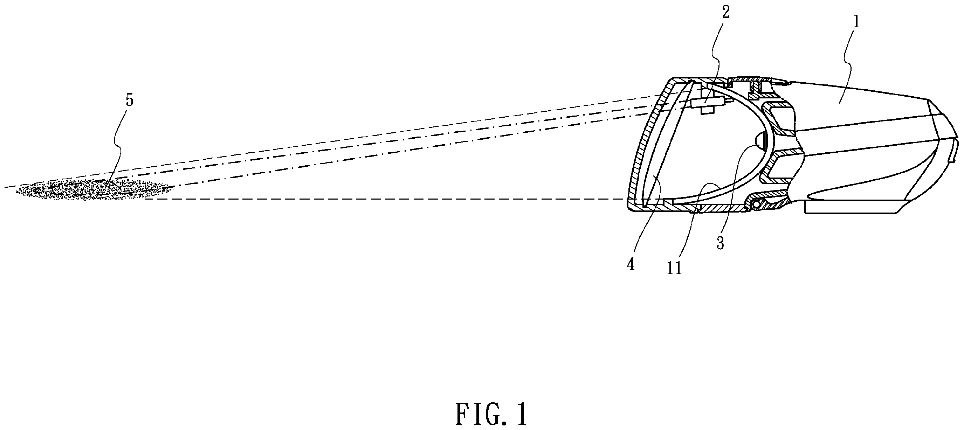

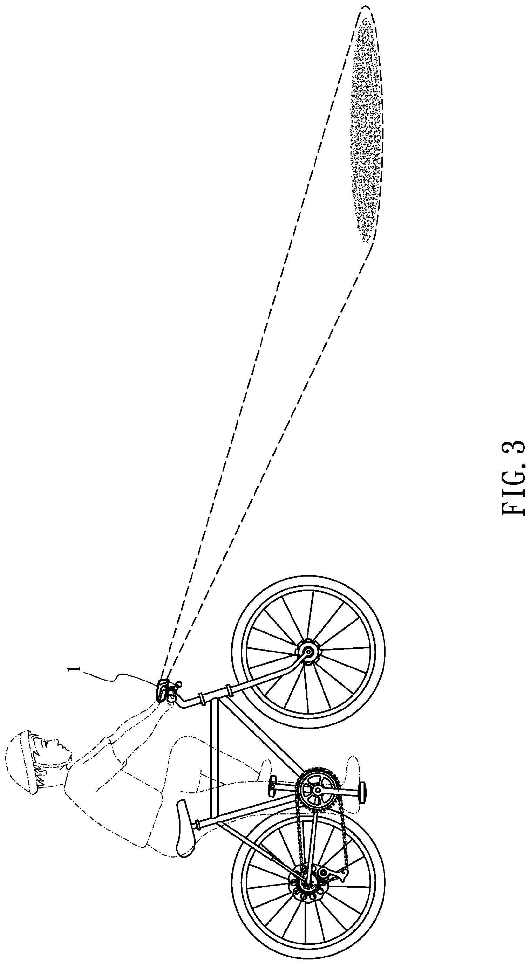

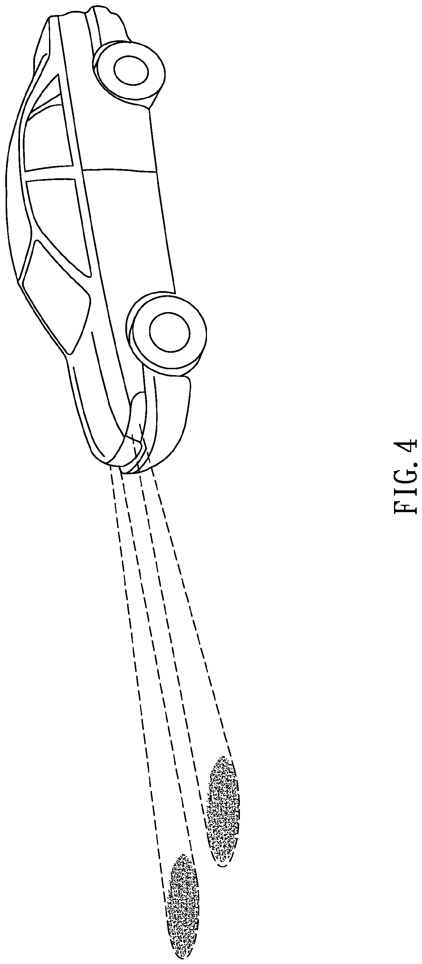

Referring to Figs. 1-2, an intelligent light device for a vehicle comprises a light body 1, a light-controlling unit 2, a light-emitting unit 3 and a condensing lens 4. The light body 1 has a reflective cup 11 defined at a front portion thereof. The reflective cup 11 is concaved toward one end of the light body 1. An opening is defined at one end of the reflective cup 11. The condensing lens 4 is defined at the opening of the reflective cup 11. The light-controlling unit 2 is defined in the light body 1. The light-emitting unit 3 is defined on an inner wall of the reflective cup 11 and faces toward the condensing lens 4. A light projection region 5 is defined by the light beam which is projected from the light-emitting unit 3 and refracted through the condensing lens 4. The light-controlling unit 2 faces toward the light projection region 5. Referring to Fig. 1, the light body 1 is a bicycle light in a preferred embodiment. The light body 1 has a space defined at the front portion thereof so as to receive the reflective cup 11. The light-controlling unit 2 is defined on the reflective cup 11. The condensing lens 4 is disposed at the opening of the reflective cup 11. The light-emitting unit 3 is defined at a center of the inner wall of the reflective cup 11. One portion of the light beam from the light-emitting unit 3 is projected toward a front area of the light body 1 via the condensing lens 4; another portion of the light beam from the light-emitting unit 3 is first reflected to the condensing lens 4 via the reflective cup 11 and then projected toward the front area of the light body 1. The light projection region 5 is defined at the front area of the light body 1 where the light beam from the light-emitting unit 3 projected to. A horizontal distance is defined between the light body 1 and the light projection region 5. (The distance is in a range from five to thirty meters in the present invention. In one embodiment of the present invention referring to Fig. 3, the horizontal distance is in a range from five to ten meters so as to provide a visible region for a rider of a bicycle or a motorcycle and also for a pedestrian to see the coming bicycle or motorcycle; in addition, the horizontal distance corresponds to another horizontal distance of a general light body which is powered by a battery. In another embodiment of the present invention referring to Fig. 4, the horizontal distance is in a range from fifteen to thirty meters so as to provide a visible region for a car driver.). The light-controlling unit 2 is disposed on a top of the inner wall of the reflective cup 11 and faces toward the light projection region 5. The light-controlling unit 2 is moderate-sized, so that a size of the light body 1 does not need to be enlarged to receive the light-controlling unit 2; also, the light-controlling unit 2 does not interfere with the light beam projection of the light-emitting unit 3.

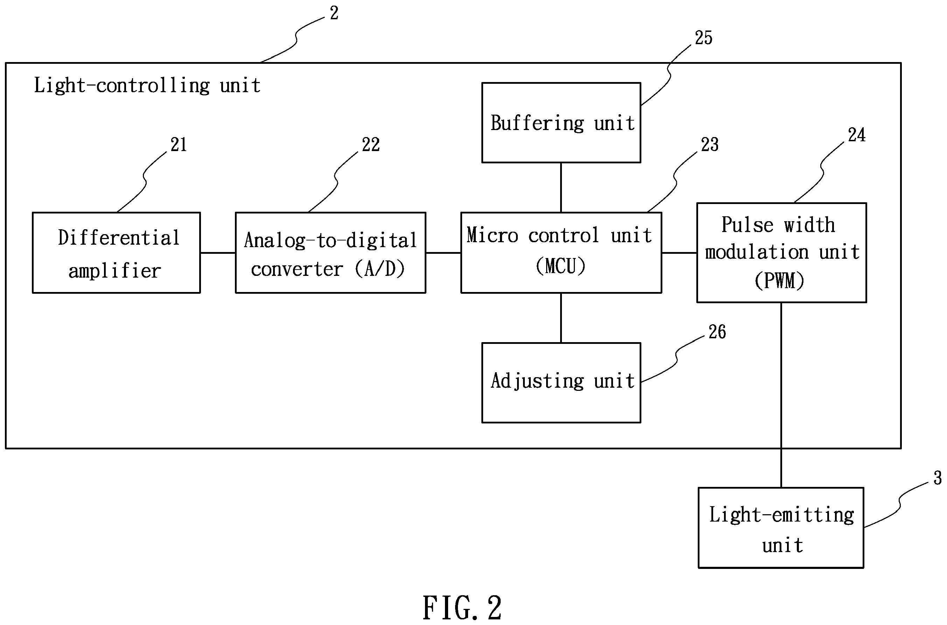

Referring to Fig. 2, the light-controlling unit 2 has a differential amplifier 21, an analog-to-digital converter 22 (hereinafter referred to as A/D 22), a micro control unit 23(hereinafter referred to as MCU 23) and a pulse width modulation unit 24 (hereinafter referred to as PWM 24). The differential amplifier 21 is used to sense a first illumination level of a surrounding area of the light projection region 5, and also amplify and transmit a signal of the first illumination level to the A/D 22(the differential amplifier 21 is one of an ordinary skill in the art). The A/D 22 is used to convert the signal of the first illumination level from a continuous analog signal to a discrete digital signal and also to transmit the signal to the MCU 23. The MCU 23 has a preset illumination level. The MCU 23 is used to receive the signal from the A/D 22. When the MCU 23 receives the signal from the A/D 22, the MCU 23 first compares the signal with the preset illumination level and generates a difference value between the preset illumination level and the first illumination level of the surrounding area of the light projection region 5; and then, the MCU 23 transmits the difference value as one command to the PWM 24. The PWM 24 is used to adjust a second illumination level of the light-emitting unit 3 according to one command from the MCU 23. In addition, the differential amplifier 21 and the light-emitting unit 3 constitute a light sensitive semiconductor; therefore, the present invention is able to emit the light, receive the light and amplify the signal of the light. The light-controlling unit 2 further has an adjusting unit 26 which is connected to the MCU 23. The adjusting unit 26 is used to adjust the second illumination level of the light-emitting unit 3. A user can adjust the second illumination level of the light-emitting unit 3 manually via the adjusting unit 26. Therefore, the user can adjust the second illumination level of the light-emitting unit 3 manually according to his or her preference so as to create an appropriate and comfortable illumination level of the light-emitting unit 3.

Under this arrangement, the first illumination level of the surrounding area of the light projection region 5 is sensed via the differential amplifier 21 firstly; and then, the signal of the first illumination level is amplified and transmitted to the A/D 22 via the differential amplifier 21; later, the signal of the first illumination level is transmitted to the MCU 23 via the A/D 22; thereafter, the difference value between the preset illumination level and the first illumination level of the surrounding area of the light projection region 5 is generated and transmitted to the PWM 24 via the MCU 23; lastly, the light-emitting unit 3 is adjusted according to the signal of the difference value from the PWM 24 so as to achieve a third illumination level of the light projection region 5 by increasing or decreasing the first illumination level.

In addition, the light-controlling unit 2 further has a buffering unit 25. The buffering unit 25 has a preset buffering time. When the signal sensed via the light-controlling unit 2 changes within one time interval which is shorter than the preset buffering time of the buffering unit 25, another command is generated via the MCU 23 and the PWM 24 so as to stop the light-emitting unit 3 from adjusting the second illumination level. Therefore, when the first illumination level of the surrounding area of the light projection region 5 is changed temporally, another command generated via the light-controlling unit 2 prevents the light-emitting unit 3 from adjusting the second illumination level, so that the present invention is not flashed occasionally which is caused by the unnecessary adjustment of the light-emitting unit 3. On the contrary, when the first illumination level sensed via the light-controlling unit 2 changes within another time interval which is longer than the preset buffering time of the buffering unit 25, the buffering unit 25 and the MCU 23 integrate the data of another time interval and the first illumination level so as to generate one command; and then, one command is transmitted to the PWM 24; thereafter, the second illumination of the light-emitting unit 3 is adjusted via the PWM 24 so as to achieve the third illumination level of the light projection region 5.

The characteristics of the present invention are described as following.

Firstly, the first illumination level of the surrounding area of the light projection region 5 is sensed via the differential amplifier 21 firstly; and then, the difference value between the preset illumination level and the first illumination level of the surrounding area of the light projection region 5 is generated via the light-controlling unit 2; thereafter, one command is generated according to the difference value; lastly, the light-emitting unit 3 is adjusted according one command so as to achieve the third illumination level of the light projection region 5 by efficiently increasing or decreasing the first illumination level. Therefore, the rider and the pedestrian can see the road conditions clearly and automatically because of the present invention, rather than adjust the light body 1 manually as the prior art; besides, the adjusting mechanism of the present invention is also different from the adjusting mechanism of the prior art which can only turn on and off of the light body 1.

Secondly, since the light body 1 of the present invention is turned up or turned down according to the first illumination level of the surrounding area of the light projection region 5, a compact power source with a compact capacitance is enough for the present invention. Therefore, the present invention has a lighter weight relative to the prior art because of the compact power source. Besides, the compact power source can last longer than the prior art because the prior art can only turn on or off the light body 1, and the light body 1 of the prior art sometimes keeps turning on even when the illumination is not necessary.

Thirdly, the buffering unit 25 ensures the illumination level of the surrounding area of the light projection region 5 to stay in a constant illumination level by giving another command to the light-emitting unit 3, so that the present invention is not flashed which is caused by the unnecessary adjustment of the light-emitting unit 3. Therefore, the present invention illuminates stably and constantly because of the buffering unit 25.

Fourthly, the light body 1 is a car light in the other embodiment of the present invention. When driving in the city or the country, the requirements of the illumination levels are different. In the city, the surrounding environment of a car is bright and does not need to be illuminated a lot in order to see the road conditions; while in the country, the surrounding environment of the car is relatively dark and needs to be illuminated more than in the city. The present invention adjusts the second illumination level of the light-emitting unit 3 according to the surrounding environment of the car; therefore, a driver checks the road conditions clearly and drives safely in both city and country because of the present invention.

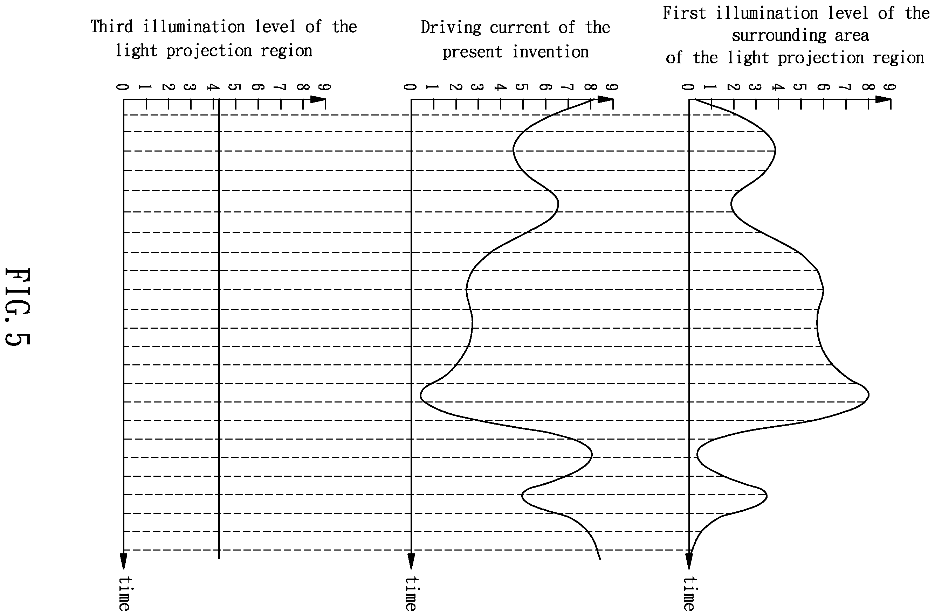

Referring to Fig. 5, the first illumination level of the surrounding area of the light projection region 5 and the corresponding time are plotted as illustrated in the top figure of Fig. 5; the driving current of the present invention and the corresponding time are plotted as illustrated in the middle figure of Fig. 5; the third illumination level of the light projection region 5 and the corresponding time are plotted with as illustrated in the bottom figure of Fig. 5; wherein the driving current is directly proportional to the second illumination level of the light-emitting unit 3. As shown in Fig. 5, when the first illumination level of the surrounding area of the light projection region 5 is low, the second illumination level of the light-emitting unit 3 is increased so as to increase the third illumination level of the light projection region 5, so that the driving current of the present invention is also increased. Therefore, the third illumination level of the projection region 5 stays at the preset illumination level of the MCU 23.

## Claims

1. An intelligent light device for a vehicle comprising a light body (1), a light-controlling unit (2), a light-emitting unit (3) and a condensing lens (4);
wherein the light body (1) has a reflective cup (11) defined at a front portion thereof, the reflective cup (11) concaved toward one end of the light body (1), an opening is defined at one end of the reflective cup (11), the condensing lens (4) is defined at the opening of the reflective cup (11), the light-controlling unit (2) is connected on the reflective cup (11) of the light body (1), the light-emitting unit (3) is defined on an inner wall of the reflective cup (11) and faces toward the condensing lens (4), the light-emitting unit (3) is adapted to emit, at a second illumination level, a light beam which is configured to be refracted through the condensing lens (4) and to form a light projection region (5) having a third illumination level, the light-controlling unit (2) is adapted to face toward the light projection region (5);
wherein the light-controlling unit (2) is adapted to sense a first illumination level of a surrounding area of the light projection region (5),
the intelligent light device being **characterized in that** the light-controlling unit (2) has a micro control unit (23), a pulse width modulation unit (24), and a buffering unit (25),
wherein the micro control unit (23) has a preset illumination level which is a desired value for the third illumination level, and is adapted to:
receive a signal of the first illumination level,
compare the signal with the preset illumination level and generate a difference value between the preset illumination level and the first illumination level;
transmit the difference value as one command to the pulse width modulation unit (24);
wherein the pulse width modulation unit (24) is adapted to adjust the second illumination level of the light-emitting unit (3) according to the command from the micro control unit (23) so as to achieve the third illumination level of the light projection region (5) by increasing or decreasing the second illumination level;
wherein the buffering unit (25) has a preset buffering time,
wherein the micro control unit (23) is further adapted to:
when the first illumination level sensed via the light-controlling unit (2) changes within one time interval which is shorter than the preset buffering time of the buffering unit (25), generate a command so as to stop, via the pulse width modulation unit (24), the light-emitting unit (3) from adjusting the second illumination level, when the first illumination level sensed via the light-controlling unit (2) changes within another time interval which is longer than the preset buffering time of the buffering unit (25), integrate, together with the buffering unit (25), the data of said another time interval and the first illumination level so as to generate said difference value as the command for transmission to the pulse width modulation unit (24) so that the second illumination level of the light-emitting unit (3) is adjusted so as to achieve the third illumination level of the light projection region (5).

2. The intelligent light device for a vehicle as claimed in claim 1, wherein the light-controlling unit (2) further has a differential amplifier (21) and an analog-to-digital converter (22); the differential amplifier (21) is adapted to sense the first illumination level of the surrounding area of the light projection region (5), and to amplify and transmit the signal of the first illumination level to the analog-to-digital converter (22); the analog-to-digital converter (22) is adapted to convert the signal of the first illumination level from a continuous analog signal to a discrete digital signal and to transmit the signal to the micro control unit (23).

3. The intelligent light device for a vehicle as claimed in claim 1, further comprising a light sensitive semiconductor

4. The intelligent light device for a vehicle as claimed in claim 1, wherein the light body (1) further has an adjusting unit (26) which is connected to the micro control unit (23); the adjusting unit (26) is adapted to be adjusted manually so that the second illumination level of the light-emitting unit (3) can be adjusted.

## Patentansprüche

1. Intelligente fahrzeugmontierte Beleuchtungsvorrichtung mit einem Lichtkörper (1), einer Lichtsteuereinheit (2), einer lichtemittierenden Einheit (3) und einem Kondensor (4);
wobei der Lichtkörper (1) eine reflektierende Schale (11) aufweist, die an einem Vorderteil davon definiert ist, die reflektierende Schale (11) ist zu einem Ende des Lichtkörpers (1) hin gewölbt, eine Öffnung ist an einem Ende der reflektierenden Schale (11) definiert, der Kondensor (4) ist an der Öffnung der reflektierenden Schale (11) definiert, die Lichtsteuereinheit (2) ist mit der reflektierenden Schale (11) des Lichtkörpers (1) verbunden, die lichtemittierende Einheit (3) ist auf einer Innenwand der reflektierenden Schale (11) definiert und weist zu dem Kondensor (4) hin, die lichtemittierende Einheit (3) ist geeignet, um bei einer zweiten Beleuchtungsstärke einen Lichtstrahl auszustrahlen, der konfiguriert ist, um durch den Kondensor (4) gebrochen zu werden und um einen Lichtprojektionsbereich (5) zu bilden, der eine dritte Beleuchtungsstärke hat, wobei die Lichtsteuereinheit (2) geeignet ist, zu dem Lichtprojektionsbereich (5) hin zu weisen;
wobei die Lichtsteuereinheit (2) geeignet ist, eine erste Beleuchtungsstärke eines Umgebungsbereichs des Lichtprojektionsbereichs (5) wahrzunehmen,
wobei die intelligente Beleuchtungsvorrichtung **dadurch gekennzeichnet ist, dass** die Lichtsteuereinheit (2) eine Mikrosteuerung (23), eine Impulsbreitenmodulationseinheit (24) und eine Puffereinheit (25) aufweist,
wobei die Mikrosteuerung (23) eine voreingestellte Beleuchtungsstärke hat, die ein Sollwert für die dritte Beleuchtungsstärke ist, und geeignet ist:
ein Signal der ersten Beleuchtungsstärke zu empfangen,
das Signal mit der voreingestellten Beleuchtungsstärke zu vergleichen und einen Differenzwert zwischen der voreingestellten Beleuchtungsstärke und der ersten Beleuchtungsstärke zu erzeugen;
den Differenzwert als einen Befehl an die Impulsbreitenmodulationseinheit (24) zu übertragen;
wobei die Impulsbreitenmodulationseinheit (24) geeignet ist, die zweite Beleuchtungsstärke der lichtemittierenden Einheit (3) gemäß dem Befehl der Mikrosteuerung (23) einzustellen, um die dritte Beleuchtungsstärke des Lichtprojektionsbereichs (5) zu erreichen, durch Erhöhung oder Verringerung der zweiten Beleuchtungsstärke;
wobei die Puffereinheit (25) eine voreingestellte Pufferzeit hat,
wobei die Mikrosteuerung (23) außerdem geeignet ist:
wenn die erste Beleuchtungsstärke, die von der Lichtsteuereinheit (2) wahrgenommen wurde, sich innerhalb einer Zeitspanne ändert, die kürzer ist als die voreingestellte Pufferzeit der Puffereinheit (25), einen Befehl zu erzeugen, um mittels der Impulsbreitenmodulationseinheit (24) die lichtemittierende Einheit (3) am Einstellen der zweiten Beleuchtungsstärke zu hindern;
wenn die erste Beleuchtungsstärke, die von der Lichtsteuereinheit (2) wahrgenommen wurde, sich innerhalb einer anderen Zeitspanne ändert, die länger ist als die voreingestellte Pufferzeit der Puffereinheit (25), zusammen mit der Puffereinheit (25) die Daten der anderen Zeitspanne und die erste Beleuchtungsstärke zu integrieren, um besagten Differenzwert zu erzeugen, als Befehl zur Übertragung an die Impulsbreitenmodulationseinheit (24), so dass die zweite Beleuchtungsstärke der lichtemittierenden Einheit (3) eingestellt wird, um die dritte Beleuchtungsstärke des Lichtprojektionsbereichs (5) zu erreichen.

2. Intelligente fahrzeugmontierte Beleuchtungsvorrichtung nach Anspruch 1, wobei die Lichtsteuereinheit (2) des weiteren einen Differenzverstärker (21) und einen Analog-Digital-Wandler (22) umfasst; der Differenzverstärker (21) ist geeignet, die erste Beleuchtungsstärke des umliegenden Bereichs des Lichtprojektionsbereichs (5) wahrzunehmen und das Signal der ersten Beleuchtungsstärke zu verstärken und an den Analog-Digital-Wandler (22) zu übertragen; der Analog-Digital-Wandler (22) ist geeignet, das Signal der ersten Beleuchtungsstärke von einem kontinuierlichen analogen Signal in ein diskretes digitales Signal umzuwandeln und das Signal an die Mikrosteuerung (23) zu übertragen.

3. Intelligente fahrzeugmontierte Beleuchtungsvorrichtung nach Anspruch 1, die des Weiteren einen lichtempfindlichen Halbleiter umfasst.

4. Intelligente fahrzeugmontierte Beleuchtungsvorrichtung nach Anspruch 1, wobei der Lichtkörper (1) des weiteren eine Einstelleinheit (26) aufweist, die mit der Mikrosteuerung (23) verbunden ist; die Einstelleinheit (26) ist geeignet, manuell eingestellt zu werden, so dass die zweite Beleuchtungsstärke der lichtemittierenden Einheit (3) eingestellt werden kann.

## Revendications

1. Dispositif d'éclairage intelligent pour un véhicule, comprenant un corps de lampe (1), une unité de commande de lumière (2), une unité d'émission de lumière (3) et une lentille de condensation (4) ;
le corps de lampe (1) ayant une coupelle réfléchissante (11) définie au niveau d'une partie avant de celui-ci, la coupelle réfléchissante (11) étant concave vers une extrémité du corps de lampe (1), une ouverture étant définie au niveau d'une extrémité de la coupelle réfléchissante (11), la lentille de condensation (4) étant définie au niveau de l'ouverture de la coupelle réfléchissante (11), l'unité de commande de lumière (2) étant reliée sur la coupelle réfléchissante (11) du corps de lampe (1), l'unité d'émission de lumière (3) étant définie sur une paroi interne de la coupelle réfléchissante (11) et étant tournée vers la lentille de condensation (4), l'unité d'émission de lumière (3) étant conçue pour émettre, à un deuxième niveau d'éclairement, un faisceau lumineux qui est configuré pour être réfracté à travers la lentille de condensation (4) et pour former une région de projection de lumière (5) ayant un troisième niveau d'éclairement, l'unité de commande de lumière (2) étant conçue pour être tournée vers la région de projection de lumière (5) ;
l'unité de commande de lumière (2) étant conçue pour détecter un premier niveau d'éclairement d'une zone environnante de la région de projection de lumière (5),
le dispositif d'éclairage intelligent étant **caractérisé par le fait que** l'unité de commande de lumière (2) a une micro-unité de commande (23), une unité de modulation d'impulsions en largeur (24) et une unité de mise en tampon (25),
la micro-unité de commande (23) ayant un niveau d'éclairement prédéfini qui est une valeur souhaitée pour le troisième niveau d'éclairement, et étant conçue pour :
recevoir un signal du premier niveau d'éclairement,
comparer le signal au niveau d'éclairement prédéfini et générer une valeur de différence entre le niveau d'éclairement prédéfini et le premier niveau d'éclairement ;
transmettre la valeur de différence sous la forme d'une instruction à l'unité de modulation d'impulsions en largeur (24) ;
l'unité de modulation d'impulsions en largeur (24) étant conçue pour régler le deuxième niveau d'éclairement de l'unité d'émission de lumière (3) selon l'instruction provenant de la micro-unité de commande (23) de façon à obtenir le troisième niveau d'éclairement de la région de projection de lumière (5) par augmentation ou diminution du deuxième niveau d'éclairement ;
l'unité de mise en tampon (25) ayant un temps de mise en tampon prédéfini,
la micro-unité de commande (23) étant en outre conçue pour :
lorsque le premier niveau d'éclairement détecté par l'intermédiaire de l'unité de commande de lumière (2) change à l'intérieur d'un intervalle de temps qui est plus court que le temps de mise en tampon prédéfini de l'unité de mise en tampon (25), générer une instruction de façon à ce que, par l'intermédiaire de l'unité de modulation d'impulsions en largeur (24), l'unité d'émission de lumière (3) arrête le réglage du deuxième niveau d'éclairement ;
lorsque le premier niveau d'éclairement détecté par l'intermédiaire de l'unité de commande de lumière (2) change à l'intérieur d'un autre intervalle de temps qui est plus long que le temps de mise en tampon prédéfini de l'unité de mise en tampon (25), intégrer, conjointement avec l'unité de mise en tampon (25), les données dudit autre intervalle de temps et du premier niveau d'éclairement de façon à générer ladite valeur de différence sous la forme de l'instruction pour une transmission à l'unité de modulation d'impulsions en largeur (24) de telle sorte que le deuxième niveau d'éclairement de l'unité d'émission de lumière (3) est réglé de façon à obtenir le troisième niveau d'éclairement de la région de projection de lumière (5).

2. Dispositif d'éclairage intelligent pour un véhicule selon la revendication 1, dans lequel l'unité de commande de lumière (2) possède en outre un amplificateur différentiel (21) et un convertisseur analogique-numérique (22) ; l'amplificateur différentiel (21) est conçu pour détecter le premier niveau d'éclairement de la zone environnante de la région de projection de lumière (5), et pour amplifier et transmettre le signal du premier niveau d'éclairement au convertisseur analogique-numérique (22) ; le convertisseur analogique-numérique (22) étant conçu pour convertir le signal du premier niveau d'éclairement d'un signal analogique continu à un signal numérique discret et pour transmettre le signal à la micro-unité de commande (23).

3. Dispositif d'éclairage intelligent pour un véhicule selon la revendication 1, comprenant en outre un semi-conducteur sensible à la lumière.

4. Dispositif d'éclairage intelligent pour un véhicule selon la revendication 1, dans lequel le corps de lampe (1) possède en outre une unité de réglage (26) qui est reliée à la micro-unité de commande (23) ; l'unité de réglage (26) étant conçue pour être réglée manuellement de telle sorte que le deuxième niveau d'éclairement de l'unité d'émission de lumière (3) peut être réglé.
